## Europäisches Patentamt
## European Patent Office
## Office européen des brevets

(19)

(11) Veröffentlichungsnummer: **0 000 739**
**B1**

(12) **EUROPÄISCHE PATENTSCHRIFT**

(45) Veröffentlichungstag der Patentschrift: **15.04.81**

(51) Int. Cl.³: **C 04 B 7/44, B 01 J 8/00**

(21) Anmeldenummer: **78100518.6**

(22) Anmeldetag: **27.07.78**

(54) Verfahren und Vorrichtung zur Herstellung von Zement in einer Wirbelschicht.

(30) Priorität: 04.08.77 DE 2735084
04.08.77 DE 2735140
23.05.78 DE 2822377
23.05.78 DE 2822419
23.05.78 DE 2822395

(43) Veröffentlichungstag der Anmeldung:
21.02.79 Patentblatt 79/4

(45) Bekanntmachung des Hinweises auf die Patenterteilung:
15.04.81 Patentblatt 81/15

(84) Benannte Vertragsstaaten:
CH DE FR GB

(56) Entgegenhaltungen:
CH - A - 292 727
CH - A - 381 590
FR - A - 1 192 838
NL - A - 6 908 171

(73) Patentinhaber: Krupp Polysius Aktiengesellschaft
Graf-Galen-Strasse 17
D-4720 Beckum (DE)

(72) Erfinder: Bauer, Klaus
von Ketteler Strasse 11
D-4740 Oelde (DE)
Erfinder: Goldmann, Wolf
Agnes-Miegel-Strasse 9
D-4720 Beckum (DE)
Erfinder: Kretzer, Horst
Tannenbergstrasse 4
D-4720 Beckum (DE)
Erfinder: Weber, Heinrich
Hammer Strasse 65
D-4720 Beckum (DE)
Erfinder: Beyer, Rüdiger
Parkstrasse 37
D-4780 Bad Waldliesborn (DE)
Erfinder: Kreft, Wilfried
Kirschweg 12
D-4722 Ennigerloh (DE)
Erfinder: Schaberg, Frank, Dr.
Zur dicken Linde 17
D-4740 Oelde (DE)
Erfinder: Weber, Rudolf
Elisabethstrasse 37
D-4740 Oelde (DE)
Erfinder: Schmelter, Herbert
Tümmler Strasse 26
D-4722 Ennigerloh (DE)
Erfinder: Ritzmann, Horst, Dr.
Riggenstrasse 4
D-4735 Enniger (DE)
Erfinder: Schnieder, Erich
Alte Strasse 11
D-4730 Ahlen 5 (Vorhelm) (DE)
Erfinder: Schepers, Georg
Wagenfeldstrasse 1
D-4722 Ennigerloh (DE)

(74) Vertreter: Tetzner, Volkmar, Dr.-Ing. Dr. jur.
Van-Gogh-Strasse 3
D-8000 München 71 (DE)

Courier Press, Leamington Spa, England.

Verfahren und Vorrichtung zur Herstellung von Zement in einer Wirbelschicht

Die Erfindung betrifft ein Verfahren zur Herstellung von Zement durch Brennen von pulverförmigem Rohmaterial in einer Wirbelschicht, in die vorgewärmtes Rohmaterial, Brennstoff, vorgewärmte Luft sowie ein rezyklierter Teil des gebrannten Gutes eingeführt werden, wobei das aus der Wirbelschicht ausgetragene Gut anschließend in einer Kühlzone durch einen Kühlluftstrom gekühlt wird, sowie eine Vorrichtung zur Durchführung das Verfahrens.

Es ist ein Verfahren zur Herstellung von Zement bekannt (CH—A 292 727), bei dem die Trocknung, Vorwärmung und Entsäuerung des Rohmateriales in übereinander angeordneten Wirbelschichten eines schachtförmigen Reaktors erfolgt, während das Fertigbrennen des Materiales (d.h. die Klinkerbildung) in einem sich trichterförmig nach unten verjüngenden Reakstionsraum geschieht, dem im unteren Bereich Brennstoff und im oberen Bereich das zu brennende Material zugeführt werden, wobei sich an das untere Auslaßende dieses Reaktionsraumes eine Kühlzone anschließt. Die Wärmebehandlung des Materiales in der Trocknungs-, Vorwärm- und Entsäuerungsstufe erfolgt durch die heißen Abgase der Fertigbrennzone sowie eventuell durch zusätzlichen Brennstoff. Nachteilig ist bei diesem Verfahren vor allem die Schwierigkeit, die Aufenthaltszeit des Gutes in der Fertigbrennzone genau zu steuern und eine gleichmäßige Wärmebehandlung aller Gutteilchen in der Fertigbrennzone zu gewährleisten.

Es ist weiterhin bekannt, granuliertes Zementrohmaterial in einer Wirbelschicht zu brennen ("Zement-Kalk-Gips", 1970, S.343 bis 347, FR—A 1 192 838 sowie DE—B 1 433 913). Nachteilig ist hierbei der mit dem Granulieren des Rohmateriales verbundene Aufwand sowie die mangelnde Gleichmäßigkeit der Wärmebehandlung der inneren und äußeren Materialzonen der Granalien.

Zur Vermeidung dieser Nachteile hat man ferner versucht, pulverförmiges Zementrohmaterial in einer Wirbelschicht zu brennen (DE—B 1 156 012, CH—A 381 590, NL—A 69 08 171 sowie "Zement-Kalk-Gips", 1971, S.571 bis 573). Hierbei wird in die Wirbelschicht außer pulverförmigen Rohmaterial, Brennstoff, Verbrennungs- und Auflockerungsluft auch ein rezyklierter Teil des gebrannten Gutes als sog. "Saatklinker" eingeführt, so daß in der Wirbelschicht durch Anlagerung des Rohmehles ein kontinuierliches Kornwachstum der Klinkerteilchen erreicht. wird. Das Rohmaterial sowie die Luft werden vor Aufgabe in die Wirbelschicht vorgewärmt. Der gebrannte Klinker wird entweder durch einem Überlauf bzw. einen zentralen Ablauf nach unten aus der Wirbelschicht abgezogen (vgl. DE—B 1 156 012 bzw. CH—A 381 590) oder zusammen mit den Gasen nach oben aus dem Wirbelschichtreaktor ausgetragen (vgl. NL—A 69 08 171).

Bei der praktischen Durchführung dieses Verfahrens traten erhebliche Schwierigkeiten auf, die eine Realisierung im großtechnischen Maßstab bisher ausschlossen. So erwies es sich bisher vielfach als schwierig, das vorgewärmte Rohmaterial und den Brennstoff rasch und gleichmäßig in der Wirbelschicht zu verteilen und den Betrieb der Wirbelschicht einwandfrei zu stabilisieren. Durch das vorhandene Kornband stellt sich nämlich in der Wirbelschicht ein gewisser Separiereffekt und damit ein nach unten hin abnehmender Lückengrad ein (als Lückengrad gilt das Verhältnis von Leervolumen zu Gesamtvolumen einer Wirbelschicht).

Problematisch ist bei dem bekannten Verfahren weiterhin die starke Alkaliverdampfung beim Brennen in der Wirbelschicht. Hierdurch ergibt sich bei stark alkalihaltigen Rohmaterialien ein außerordentlich hoher Alkaligehalt in den Abgasen der Wirbelschicht, was eine Nutzung dieser Abgase zur Vorwärmung des Rohmateriales vielfach ausschließt und damit zu einem unerwünscht großen Wärmebedarf führt.

Der Erfindung liegt daher die Aufgabe zugrunde, unter Vermeidung dieser Mängel ein Verfahren zum Brennen von pulverförmigem Zementrohmaterial in einer Wirbelschicht zu schaffen, das sich durch einen besonders stabilen Betrieb der Wirbelschicht, ein sehr gleichmäßig gebranntes Endprodukt sowie einen vergleichsweise niedrigen Wärmeverbrauch auszeichnet und auch die Herstellung von Zementklinker mit besonders niedrigem Alkaligehalt gestattet.

Diese Aufgabe wird erfindungsgemäß durch die Kombination folgender Merkmale gelöst:

a) Das vorgewärmte Rohmaterial wird vor Aufgabe in die Wirbelschicht in einer Vorkalzinationszone mit zusätzlichem Brennstoff bis auf einen Entsäuerungsgrad von 80 bis 95% vorkalziniert;

b) aus dem unteren Bereich der Wirbelschicht gelangt das gebrannte Gut in eine Kühlzone, die von dem unmittelbar unterhalb der Wirbelschicht befindlichen Teil der Gutschüttung gebildet wird;

c) ein Teil des Kühlluftstromes wird von unten her und ein weiterer Teil von der Seite her in die Wirbelschicht eingeführt;

d) das vorkalzinierte Gut wird durch den von der Seite her in die Wirbelschicht eingeführten Teil des Kühlluftstromes in die Wirbelschicht eingetragen;

e) in dem zur Einführung des vorkalzinierten Gutes bestimmten unteren Bereich der Wirbelschicht wird durch eine Querschnittsverengung etwa derselben Lückengrad wie im oberen Bereich der Wirbelshicht, vorzugsweise ein Lückengrad zwischen 0,5 und 0,8 eingestellt;

f) die in der Wirbelschicht befindliche Gutmenge wird in Abhängigkeit von einem in der Wirbelschicht gemessenen Gasdruck geregelt.

Erfindungsgemäß erfolgt eine weitgehende Entsäuerung (Vorkalzination, d.h. Austreibung des $CO_2$) des Rohmateriales vor Aufgabe in die Wirbelschicht. Dadurch wird die Wirbelschicht von einem großen Teil der sonst zu leistenden Wärmearbeit entlastet, was wessentliche Vorteile mit sich bringt: Die Wirbelschicht kann kleiner dimensioniert werden, erfordert nur eine geringere Brennstoffzufuhr und liefert eine kleinere Abgasmenge. Die wesentliche Verringerung der Abgasmenge der Wirbelschicht gestattet es, bei besonders hohem Alkaligehalt des Rohmateriales auf eine Verwertung dieser Abgase zur Vorwärmung und Vorkalzination des Rohmateriales ganz oder teilweise zu verzichten, ohne dadurch den Wärmebedarf wesentlich zu vergrößern.

Indem erfindungsgemäß ein Teil des Kühlluftstromes von unten her und ein weiterer Teil von der Seite her in die Wirbelschicht eingeführt wird, erreicht man eine rasche und gleichmäßige Verteilung von vorkalziniertem Gut und Brennstoff in der Wirbelschicht, eine besonders gleichmäßige Wärmebehandlung des Gutes und einen sehr stabilen Betrieb der Wirbelschicht.

Die rasche und gleichmäßige Verteilung des vorkalzinierten Gutes in der Wirbelschicht wird ferner noch dadurch begünstigt, daß das vorkalzinierte Gut durch einen Teil des Kühlluftstromes von der Seite her, vorzugsweise mit einem Impuls zwischen 49 und 98 Ns, in die Wirbelschicht eingeführt wird.

Indem dabei in dem zur Einführung des vorkalzinierten Gutes bestimmten unteren Bereich der Wirbelschicht durch eine Querschnittsverengung etwa derselbe Lückengrad wie im oberen Bereich der Wirbelschicht eingestellt wird, ergibt sich eine besonders intensive Materialbewegung in dieser Einführzone, was die Gefahr von Ansatzbildungen und Agglomerationen in diesem besonders gefährdeten Bereich praktisch ausschließt. Außerdem erreicht man durch diese Maßnahme eine sehr gute Verteilung des vorkalzinierten Gutes in der Wirbelschicht auch dann, wenn die Guteinführstelle sehr tief, d.h. dicht über der Kühlzone liegt.

Die durch die starke Vorkalzination und die rasche, gleichmäßige Verteilung von vorkalziniertem Gut und Brennstoff in der Wirbelschicht wesentlich verbesserten Brennverhältnisse in der Wirbelschicht gewährleisten außerdem ein gutes Funktionieren der unmittelbar unter der Wirbelschicht angeordneten Kühlzone und schließen insbesondere Betriebsstörungen durch Zusammenbackungen von Gut in der Kühlzone aus. Das erfindungsgemäße Verfahren liefert damit sehr homogen gebrannte Klinkerkügelchen von annähernd gleichmäßiger Korngröße.

Für einen stabilen Betrieb der Wirbelschicht ist es dabei wichtig, daß die jeweils in der Wirbelschicht befindliche Gutmenge unabhängig von Schwankungen der zu- und abgeführten Gutmenge annähernd konstant gehalten wird. Da jedoch in der Wirbelschicht eine wesentliche Kornvergrößerung eintritt, läßt sich die notwendige Konstanthaltung der Gutmenge nicht durch eine einfache volumetrische Steuerung der zu- und abgeführten Gutmenge erreichen. Erfindungsgemäß wird daher die in der Wirbelschicht befindliche Gutmenge in Abhängigkeit von einem in der Wirbelschicht gemessenen Gasdruck geregelt. Bei den der Erfindung zugrundeliegenden Versuchen hat sich nämlich überraschend herausgestellt, daß ein in der Wirbelschicht gemessener Gasdruck ein sehr feinfühliges und zuverlässiges Maß für die in der Wirbelschicht befindliche Gutmenge ist, so daß letztere in Abhängigkeit von dem Gasdruck konstant gehalten werden kann (indem entweder die aus der Wirbelshicht bzw. der Kühlzone ausgetragene Gutmenge oder die in die Wirbelschicht eingeführte Gutmenge oder beide Gutmengen entsprechend gesteuert werden).

Zweckmäßig wird dabei die in der Wirbelschicht befindliche Gutmenge in Abhängigkeit von der Differenz zwischen einem in der Wirbelschicht gemessenen Gasdruck und einem in der Abgasleitung der Wirbelschicht gemessenen Gasdruck geregelt, da bei einer solchen Differenzdruckregelung eine Erhöhung der Abgasmenge der Wirbelschicht keinen Einfluß auf den eingestellten Sollwert besitzt.

Zumindest ein Teil des Brennstoffes wird zweckmäßig unterhalb der Oberfläche der Wirbelschicht, vorzugsweise etwa in Höhe der Zufuhr des vorkalzinierten Gutes, von der Seite her in die Wirbelschicht eingeführt. Ein weiterer Teil des Brennstoffes kann über die Oberfläche der Wirbelschicht oder zusammen mit dem rezyklierten Teil des gebrannten Gutes in die Wirbelschicht eingeführt werden.

Der von der Seite her pneumatisch in die Wirbelschicht eingeführte Teil des Brennstoffes wird vorzugsweise zusammen mit dem vorkalzinierten Gut in die Wirbelschicht eingebracht, und zwar vorteilhaft an mehreren, gleichmäßig über den Umfang der Wirbelschicht verteilten Stellen. Dadurch erzielt man eine besonders rasche und gleichmäßige Verteilung von Gut und Brennstoff in der Wirbelschicht.

Für einen optimalen Betrieb der Wirbelschicht hat es sich als günstig erwiesen, wenn etwa 50 bis 90%, vorzugsweise etwa 2/3 der gesamten, der Wirbelschicht zugeführten Luft von unten her und 10 bis 50%, vorzugsweise etwa 1/3 der Luft von der Seite her in die Wirbelschicht eingeleitet werden.

Der Vorwärm- und Vorkalzinationszone wird zweckmäßig ein einstellbarer Teil der Abgase der Wirbelschicht sowie vorsugsweise ein einstellbarer Teil des Kühlluftstromes zugeführt, während der übrige Teil der Abgase der Wirbelschicht unter Umgehung der Vorwärm- und Vorkalzinationszone abgeführt wird. Bei besonders alkalihaltigem Rohmaterial können auch die gesamten Abgase der Wirbelschicht unter Umgehung der Vorwärm- und Vorkalzinationszone abgeführt und letztere ausschließlich mit Kühlluft gespeist werden.

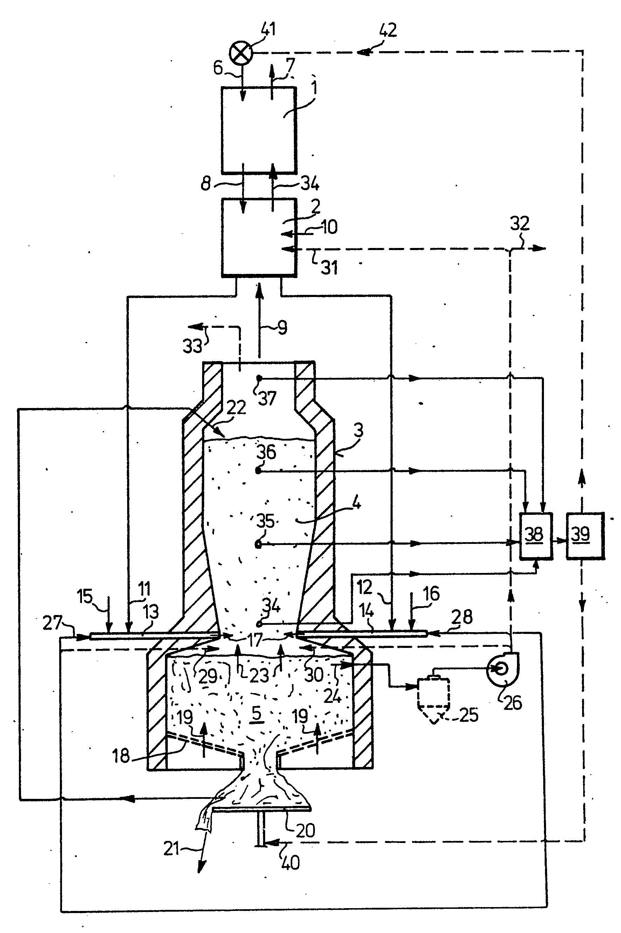

Ein Ausführungsbeispiel einer Anlage zur Durchführung des erfindungsgemäßen Verfahrens ist in der Zeichnung veranschaulicht.

Die Anlage enthält einen Vorwärmer 1, eine Vorkalzinationszone 2 und einen schachtförmigen Reaktionsraum 3 mit einer Wirbelschicht 4 und einer Kühlzone 5.

Im Vorwärmer 1, der beispielsweise als mehrstufiger Zylkonwärmetauscher ausgebildet sein kann, wird das bei 6 aufgegebene pulverförmige Rohmaterial im Gegenstrom durch heiße Gase (Pfeil 7) vorgewärmt und gelangt dann (Pfeil 8) in die Vorkalzinationszone 2, wo es durch die heißen Abgase (Pfeil 9) des Reaktionsraumes 3 und zusätzlichen Brennstoff (Pfeil 10) bis auf einen Entsäuerungsgrad von 80 bis 95% vorkalziniert wird.

Das vorkalzinierte Gut wird dann (Pfeile 11, 12) Förderleitungen 13, 14 zugeführt, über die es zusammen mit Brennstoff 15 bzw. 16 an wenigstens zwei einander gegenüberliegenden Stellen vom Umfang her pneumatisch in die Wirbelschicht 4 eingetragen wird (Pfeile 17).

Der lichte Querschnitt des Reaktionsraumes 3 ist im Bereich der Einmündung der Förderleitungen 13, 14 verengt und erweitert sich von dieser Guteinführzone aus nach oben hin konisch. Der Querschnitt des Reaktionsraumes 3 sowie die Strömungsgeschwindigkeiten der Luft sind so bemessen, daß sich in dem zur Einführung des vorkalzinierten Gutes bestimmten unteren Bereich der Wirbelschicht, d.h. etwa auf der Höhe der Förderleitungen 13, 14, etwa derselbe Lückengrad, vorzugsweise zwischen 0.6 und 0.7 wie im oberen Bereich der Wirbelschicht einstellt.

In der Wirbelschicht 4 wird das vorkalzinierte Gut zu Zementklinker gebrannt. Nach Erreichen einer bestimmten Klinkergröße gelant das gebrannte Gut in die Kühlzone 5, der von unten her durch den luftdurchlässigen Boden 18 ein Kühlluftstrom (Pfeile 19) zugeführt wird.

Das gekühlte Gut wird durch eine rotierende Austragseinrichtung 20 abgezogen (Pfeil 21). Ein Teil des Gutes wird als Saatklinker in die Wirbelschicht 4 rezykliert (Pfeil 22).

Ein durch die Pfeile 23 gekennzeichneter Teil des Kühlluftstromes wird von unten her als Auflockerungs- und Verbrennungsluft in die Wirbelschicht 4 eingeführt. Ein weiterer Teil (Pfeil 24) wird seitlich am Umfang des oberen Bereiches der Kühlzone 5 durch eine Luftabzugsleitung abgezogen, enventuell in einem Zyklon 25 entstaubt und durch ein Gebläse 26 den Förderleitungen 13, 14 als Förderluft für das vorkalzinierte Gut (Pfeile 11, 12) und den Brennstoff (Pfeile 15, 16) zugeführt (Pfeile 27, 28).

Ein weiterer Teil dieser vom Gebläse 26 geförderten Luft kann—zweckmäßig unterhalb der Ebene der Förderleitungen 13, 14—als zusätzliche Seitenluft in die Wirbelschicht 4 eingeführt werden (Pfeile 29, 30).

Ein weiterer Anteil der vom Gebläse 26 geförderten Luft der Kühlzone 5 kann als zusätzliche Verbrennungsluft der Vorkalzinationszone 2 zugeleitet werden (Pfeil 31). Ein eventuell überschüssiger Luftanteil (Pfeil 32) kann verworfen oder anderweitig verwertet werden. Ebenso kann ein gewisser Anteil der Abgase der Wirbelschicht 4—insbesondere bei hohem Alkaligehalt—unter Umgehung der Vorkalzinationszone 2 und des Vorwärmers 1 abgezweigt werden (Pfeil 33).

Zur Regelung der in der Wirbelschicht 4 befindlichen Gutmenge enthält die Anlage vier Druckmeßstellen 34, 35, 36 und 37, von denen die Druckmeßstelle 34 etwa im Bereich der Guteinführung liegt, die Meßstelle 35 etwa auf 1/3 bis 1/2 der Höhe der Wirbelschicht 4, die Druckmeßstelle 36 im oberen Drittel der Wirbelschicht und die Druckmeßstelle 37 in der Abgasleitung der Wirbelschicht.

Die vier Druckmeßstellen sind an einen Druckumformer 38 angeschlossen, der mit einem Regler 39 verbunden ist. Dieser Regeler 39 wirkt einerseits auf die Austragseinrichtung 20 (Steuerleitung 40) und andererseits auf eine Gutaufgabe-Dosiereinrichtung 41 (Steuerleitung 42).

Der Regler 39 hält die in der Wirbelschicht 4 befindliche Gutmenge konstant, indem beispielsweise durch die vom Regler 39 gesteuerte Austragseinrichtung 20 jeweils nur die über dem Sollwert befindliche Gutmenge aus der Kühlzone 5 und damit aus der Wirbelschicht 4 ausgetragen oder indem durch die Gutaufgabe-Dosiereinrichtung 41 jeweils eine am Sollwert fehlende Gutmenge zugeführt wird. Als Maß für die in der Wirbelschicht 4 befindlich Gutmenge wird ein von den Druckmeßstellen 34 bis 37 gelieferter Druckwert verwendet, beispielsweise die Differenz der an den Meßstellen 34 und 37 bestimmten Drücke.

Zur weiteren Erläuterung der Erfindung diene folgendes Beispiel:

In der Wirbelschicht (einschließlich ihrer engsten Stelle im Bereich der Gut- und Brennstoffeinführung) wird eine Gasgeschwindigkeit von ca. 6 m/s und ein Lückengrad (Verhaltnis von Leervolumen zu Gesamtvolumen der Wirbelschicht) von etwa 0,65 eingestellt; in der Kühlzone beträgt die Gasgeschwindigkeit ca. 2 m/s und der Lückengrad etwa 0,4 oder weniger.

Die Körnung des Saatklinkers beträgt 2 bis 4 mm; das Verhältnis Rohmehl-Saatklinker liegt bei 4:1.

Das vorgewärmte und vorkalzinierte Gut wird mit einer Temperatur von ca. 840°C in die Wirbelschicht 4 eingeführt. In dieser Wirbelschicht herrscht eine Temperatur zwischen 1300 und 1350°C. In der Kühlzone 5 wird das Gut auf eine Temperatur von 80 bis 120°C abgekühlt.

Der Glühverlust des Rohmateriales nach dem Vorwärmer liegt bei 5%. Die Körnung des entsäuerten Rohmateriales beträgt 44% > 90 μm und 8,8% > 200 μm.

Die Luftmengen können wie folgt gewählt werden; Der Kühlzone 5 werden von unten 1,00 Nm³/kg Klinker zugeführt. Hiervon gelangen 0,33 Nm³/kg Kl direkt von unten her (Pfeile 23) in die Wirbelschicht, während 0,67 Nm³/kg Kl seitlich (Pfeil 24) aus der Kühlzone abgezogen werden. Von diesem letzteren Teil gelangen 0,17 Nm³/kg Kl als Förderluft (Pfeile 27, 28) für vorkalziniertes Gut und Brennstoff von der Seite her in die Wirbelschicht 4, während 0,5 Nm³/kg Kl unmittelbar (Pfeil 31) der Vorkalzinationszone 2 zugeführt werden. Eine gleich große Luftmenge (0,5 Nm³/kg Kl) gelangt als Abgase der Wirbelschicht in die Vorkalzinationszone 2 (Pfeil 9).

Der zwischen den Druckmeßstellen 34 und 37 gemessene Differenzdruck liegt zwischen 78 und 118 m bar, der Differenzdruck zwischen den Druckmeßstellen 35 und 37 zwischen 25 und 39 m bar.

## Patentansprüche

1. Verfahren zur Herstellung von Zement durch Brennen von pulverförmigem Rohmaterial in einer Wirbelschicht, in die vorgewärmtes Rohmaterial, Brennstoff, vorgewärmte Luft sowie ein rezyklierter Teil des gebrannten Gutes eingeführt werden, wobei das aus der Wirbelschicht ausgetragene Gut anschließend in einer Kühlzone durch einen Kühlluftstrom gekühlt wird, gekennzeichnet durch die Kombination folgender Merkmale:

a) Das vorgewärmte Rohmaterial wird vor Aufgabe in die Wirbelschicht in einer Vorkalzinationszone mit zusätzlichem Brennstoff bis auf einen Entsäuerungsgrad von 80 bis 95% vorkalziniert;

b) aus dem unteren Bereich der Wirbelschicht gelangt das gebrannte Gut in eine Kühlzone, die von dem unmittelbar unterhalb der Wirbelschicht befindlichen Teil der Gutschüttung gebildet wird;

c) ein Teil des Kühlluftstromes wird von unten her und ein weiterer Teil von der Seite her in die Wirbelschicht eingeführt;

d) das vorkalzinierte Gut wird durch den von der Seite her in die Wirbelschicht eingeführten Teil des Kühlluftstromes in die Wirbelschicht eingetragen;

e) in dem zur Einführung des vorkalzinierten Gutes bestimmten unteren Bereich der Wirbelschicht wird durch eine Querschnittsverengung etwa derselben Lückengrad wie im oberen Bereich der Wirbelshicht, vorzugsweise ein Lückengrad zwischen 0,5 und 0,8 eingestellt;

f) die in der Wirbelschicht befindliche Gutmenge wird in Abhängigkeit von einem in der Wirbelschicht gemessenen Gasdruck geregelt.

2. Verfahren nach Anspruch 1, dadurch gekennzeichnet, daß das vorkalzinierte Gut mit einem Impuls zwischen 49 und 98 Ns in die Wirbelschicht eingeführt wird.

3. Verfahren nach Anspruch 1, dadurch gekennzeichnet, daß zumindest ein Teil des Brennstoffes unterhalb der Oberfläche der Wirbelschicht, vorzugsweise etwa in Höhe der Zufuhr des vorkalzinierten Gutes, von der Seite her in die Wirbelschicht eingeführt wird.

4. Verfahren nach Anspruch 1 und 3, dadurch gekennzeichnet, daß zumindest ein Teil des Brennstoffes zusammen mit dem vorkalzinierten Gut an mehreren, vorzugsweise gleichmäßig über den Umfang der Wirbelschicht verteilten Stellen, von der Seite her durch einen Teil des Kühlluftstromes in die Wirbelschicht eingeführt wird.

5. Verfahren nach Anspruch 1, dadurch gekennzeichnet, daß die in der Wirbelschicht befindliche Gutmenge in Abhängigkeit von der Differenz zwischen einem in der Wirbelschicht gemessenen Gasdruck und einem in der Abgasleitung der Wirbelschicht gemessenen Gasdruck geregelt wird.

6. Verfahren nach Anspruch 1, dadurch gekennzeichnet, daß etwa 50 bis 90%, vorzugsweise etwa 2/3 der gesamten, der Wirbelschicht zugeführten Luft von unten her und 10 bis 50%, vorzugsweise etwa 1/3 der Luft von der Seite her in die Wirbelschicht eingeleitet werden.

7. Verfahren nach Anspruch 1, dadurch gekennzeichnet, daß der Vorwärm- und Vorkalzinationszone ein einstellbarer Teil der Abgase der Wirbelschicht sowie vorzugsweise ein einstellbarer Teil des Kühlluftstromes zugeführt wird, während der übrige Teil der Abgase der Wirbelschicht unter Umgehung der Vorwärm- und Vorkalzinationszone abgeführt wird.

8. Vorrichtung zur Durchführung des Verfahrens nach Anspruch 1, enthaltend einen schachtförmigen Reaktionsraum (3), der im unteren Bereich eine Kühlzone (5) und darüber eine Wirbelschicht (4) aufweist, ferner enthaltend einen als mehrstufiger Gegenstrom-Wäremetauscher ausgebildeten Vorwärmer (7) mit einer durch zusätzlichen Brennstoff (10) versorgten Vorkalzinationszone (2), dadurch gekennzeichnet, daß am Umfang des oberen Bereiches der Kühlzone (5) wenigstens eine Luftabzugsleitung (Pfeil 24) angeschlossen ist, die über ein Gebläse (26) mit einer das vorkalzinierte Gut von der Seite her in den unteren Bereich der Wirbelschicht (4) einführenden pneumatischen Förderleitung (13, 14), einer einen weiteren Luftstrom von der Seite her in die Wirbelschicht (4) einführenden Leitung (Pfeile 29, 30) sowie vorzugsweise mit einer der Vorkalzinationszone (2) Verbrennungsluft zuführenden Leitung (Pfeil 31) verbunden ist und daß sich der lichte Querschnitt des Reaktionsraumes (3) von der Guteinführzone (Förderleitungen 13, 14) nach oben hin konisch erweitert.

**Revendications**

1. Procédé de production de ciment par cuisson de matière première pulvérulente dans une couche fluidisée dans laquelle sont introduits la matière première rèchauffée, du combustible, de l'air réchauffé et une partie recyclée de la matière ayant subi la cuisson, la matière déchargée de la couche fluidisée passant ensuite dans une zone de refroidissement par un flux d'air, procédé caractérisé par la combinaison des particularités suivantes:

a) la matière première réchauffée passe avant d'être chargée dans la couche fluidisée dans une zone de calcination initiale avec un complément de combustible de manière que sont taux de désacidification atteigne 80 à 95%;

b) la matière ayant subi la cuisson parvient de la région inférieure de la couche fluidisée dans une zone de refroidissement qui est formée par une partie du lit de matière se trouvant immédiatement au-dessous de la couche fluidisée;

c) une partie du flux d'air de refroidissement est introduite par le bas et une autre partie de cet air est introduite par le côté dans la couche fluidisée;

d) la partie du flux d'air de refroidissement introduite par le côté dans la couche fluidisée charge dans cette dernière la matière ayant subi la calcination initiale;

e) un rétrécissement de section régle le taux de vides approximativement à la même valeur, de préférence à une valeur comprise entre 0, 5 et 0,8, dans la région inférieure de la couche fluidisée, qui est destinée à l'introduction de la matière ayant subi la calcination initiale, et dans la région supérieure de cette couche;

f) la quantité de matière se trouvant dans la couche fluidisée est réglée en fonction d'une pression de gaz mesurée dans cette couche.

2. Procédé selon la revendication 1, caractérisé en ce que la matière ayant subi la calcination initiale est introduite dans la couche fluidisée par une impulsion d'une intensité comprise entre 49 et 98 N.

3. Procédé selon la revendication 1, caractérisé en ce qu'au moins une partie du combustible est introduite par le côté dans la couche fluidisée sous la surface de cette dernière, de préférence approximativement au niveau de l'admission de la matière ayant subi la calcination initiale.

4. Procédé selon la revendications 1 et 3, caractérisé en ce qu'une partie du flux d'air de refroidissement introduit par le côté, dans la couche fluidisée, au moins une partie du combustible avec la matière ayant subi la calcination initiale, en plusieurs emplacements de préférence répartis régulièrement à la circonférence de cette couche.

5. Procédé selon la revendication 1, caractérisé en ce que la quantité de matière se trouvant dans la couche fluidisée est réglée en fonction de la différence entre une pression de gaz mesurée dans la couche fluidisée et une pression de gaz mesurée dans la canalisation d'évacuation des gaz d'échappement de la couche fluidisée.

6. Procédé selon la revendication 1, caractérisé en ce qu'environ 50 à 90%, de préférence environ les deux tiers de la quantité totale d'air sont introduits par le bas et environ 10 à 50%, de préférence environ un tiers de cette quantité totale d'air sont introduits par le côté dans le couche fluidisée.

7. Procédé selon la revendication 1, caractérisé en ce qu'une partie réglable des gaz d'échappement de la couche fluidisée ainsi que de préférence une partie réglable du flux d'air de refroidissement sont dirigées dans les zones de réchauffage et de calcination initiale tandis que le reste des gaz d'échappement de la couche fluidisée est évacué en dérivation sur ces zones de réchauffage et de calcination initiale.

8.. Dispositif pour la mise en oeuvre du prodédé selon la revendication 1, comprenent une chambre de réaction de type à cuve (3) qui comprend dans la région inférieure une zone de refroidissement (5) et, au-dessus de cette dernière, une couche fluidisée (4), ledit dispositif comprenant par ailleurs un réchauffeur (1) conformé en échangeur de chaleur à plusieurs étages à contre-courant ainsi qu'une zone de calcination initiale (2) alimentée en un complément de combustible (10), dispositif caractérisé en ce qu'au moins une canalisation de soutirage d'air (flèche 24) raccordée à la circonférence de la région supérieure de la zone de refroidissement (5) est reliée par l'intermédiaire d'une soufflante (26) à une canalisation de transfert pneumatique (13, 15) par laquelle la matière ayant subi la calcination initiale est introduite par le côté dans la région inférieure de la couche fluidisée (4), à une canalisation (flèches 29, 30) d'introduction d'un autre flux d'air par le côté par la couche fluidisée (4) ainsi que de préférence à une canalisation (flèche 31) par laquelle de l'air comburant est dirigé dans la zone de calcination initiale (2) et la section libre de la chambre de réaction (3) s'élargit en cône vers le haut de la zone d'introduction de la matière (canalisations de transfert 13, 14).

**Claims**

1. Method of producing cement by burning pulverulent raw material in a fluidized bed into which preheated raw material, fuel, preheated air and a recycled portion of the burnt material is introduced, the material discharged from the fluidized bed being subsequently cooled in a cooling zone by a cooling air flow, characterised by the combination of the following features:

a) The preheated raw material is precalcined prior to charging into the fluidized bed in a precalcination zone with additional fuel up to a deacidification degree of 80 to 95%.

b) From the lower region of the fluidized bed the burnt material passes to a cooling zone which is formed by the part of the material pile disposed directly beneath the fluidized bed;

c) a part of the cooling air flow is introduced from below and a further part from the side into the fluidized bed;

d) the precalcined material is carried into the fluidized bed by the part of the cooling air flow introduced from the side into the fluidized bed;

e) In the lower region of the fluidized bed intended for the introduction of the precalcined material by a cross-sectional construction substantially the same void degree as in the upper region of the fluidized bed is set, preferably a void degree between 0.5 and 0.8;

f) the amount of material disposed in the fluidized bed is controlled in dependence upon a gas pressure measured in the fluidized bed.

2. Method according to claim 1, characterised in that the precalcined material is introduced into the fluidized bed with an impulse between 49 and 98 Ns.

3. Method according to claim 1, characterised in that at least a part of the fuel is introduced from the side into the fluidized bed beneath the surface of the latter, preferably substantially at the level of the supply of the precalcined material.

4. Method according to claims 1 and 3, characterised in that at least a part of the fuel is introduced into the fluidized bed from the side by a part of the cooling air flow together with the precalcined material at a plurality of points distributed preferably uniformly over the periphery of the fluidized bed.

5. Method according to claim 1, characterised in that the amount of material in the fluidized bed is controlled in dependence upon the difference between a gas pressure measured in the fluidized bed and a gas pressure measured in the exhaust gas conduit of the fluidized bed.

6. Method according to claim 1, characterised in that about 50 to 90%, preferably about 2/3, of the entire air supplied to the fluidized bed is introduced from below and about 10 to 50%, preferably about 1/3, of the air is introduced from the side into the fluidized bed.

7. Method according to claim 1, characterised in that to the preheating and precalcination zone an adjustable portion of the exhaust gases of the fluidized bed and preferably an adjustable portion of the cooling air flow are supplied whilst the remaining portion of the exhaust gases is removed from the fluidized bed bypassing the preheating and precalcination zone.

8. Apparatus for carrying out the method according to claim 1 including a shaft-like reaction chamber (3) having in the lower region a cooling zone (5) and thereabove a fluidized bed (4), furthermore a preheater (1) constructed as multi-stage counterflow heat exchanger and having a precalcination zone (2) supplied by additional fuel (10), characterised in that at the periphery of the upper region of the cooling zone (5) at least one extraction conduit (arrow 24) is connected which via a fan (26) is connected to a pneumatic conveying conduit (13) introducing the precalcined material from the side into the lower region of the fluidized bed (4), a conduit (arrows 29, 30) introducing a further air flow from the side into the fluidized bed (4) and preferably to a conduit (arrow 31) supplying combustion air to the precalcination zone (2) and that the clear cross-section of the reaction chamber (3) widens upwardly conically from the material introduction zone (conveying conduits 13, 14).